# EUROPÄISCHE PATENTSCHRIFT

(11) **EP 1 797 452 B1**
(45) Veröffentlichungstag und Bekanntmachung des Hinweises auf die Patenterteilung: **06.04.2011**
(21) Anmeldenummer: 05776196.7
(22) Anmeldetag: 20.07.2005
(51) Int. Cl.: G08G 1/16

(54) **ANFAHRASSISTENT FÜR KRAFTFAHRZEUGE**
START-UP ASSIST SYSTEM FOR A MOTOR VEHICLE
SYSTEME D'ASSISTANCE AU DEMARRAGE POUR VEHICULE

(30) Priorität: 29.09.2004 DE 102004047177
(43) Veröffentlichungstag der Anmeldung: 20.06.2007
(73) Patentinhaber: ROBERT BOSCH GMBH, 70442 Stuttgart (DE)
(72) Erfinder: BOECKER, Juergen, 70176 Stuttgart (DE); HOETZER, Dieter, 71706 Markgroeningen (DE); CITELLI, Silvia, 70499 Stuttgart (DE)
(86) Internationale Anmeldenummer: PCT/EP2005/053498
(87) Internationale Veröffentlichungsnummer: WO 2006/034893

(56) Entgegenhaltungen:
- GB-A- 2 309 555

## Beschreibung

### Stand der Technik

Die Erfindung betrifft einen Anfahrassistenten für Kraftfahrzeuge, mit einem langreichweitigen Ortungssystem zur Ortung vorausfahrender Fahrzeuge und einem Anfahrregler zur Einleitung und Steuerung eines Anfahrvorgangs wobei das Ortungssystem mit einem Nahbereichsortungssystem zur Ortung von Objekten unmittelbar vor dem eigenen Fahrzeug kombiniert ist und eine Entscheidungseinrichtung dazu ausgebildet ist, auf ein Signal des Nahbereichsortungssystems den Anfahrvorgang zu unterbinden oder abzubrechen.

Kraftfahrzeuge werden zunehmend mit Assistenzsystemen ausgerüstet, die den Fahrer bei der Führung des Kraftfahrzeugs unterstützen und ihm gewisse Aufgaben abnehmen. Ein Beispiel eines solchen Assistenzsystems ist ein ACC-System (Adaptive Cruise Control), das eine automatische Geschwindigkeitsregelung sowie eine automatische Regelung des Abstands zu einem vorausfahrenden Fahrzeug ermöglicht. Es sind fortgeschrittene Systeme dieser Art in Entwicklung, die es auch ermöglichen, das eigene Fahrzeug beispielsweise beim Auffahren auf ein Stauende, automatisch in den Stand zu bremsen und die auch ein automatisches Anfahren ermöglichen, wenn sich das vordere Fahrzeug wieder in Bewegung setzt. Systeme dieser Art sind auch für den Einsatz im Stadtverkehr vorgeschlagen worden. Unter einem Anfahrassistenten wird diejenige Teil eines solchen Systems verstanden, der nach einem Stillstand das automatische Wiederanfahren des Fahrzeugs steuert.

Als langreichweitiges Ortungssystem wird üblicherweise ein Radarsystem (LRR; Long Range Radar) eingesetzt, ggf.in Kombination mit einem Video- und Bildverarbeitungssystem.

Viele Fahrzeuge sind darüber hinaus auch mit einem Einparkhilfesystem ausgerüstet, bei dem Ultraschallsensoren als Nahbereichssensoren eingesetzt werden.

Ein ACC-System mit einem Anfahrassistenten der eingangs genannten Art ist aus GB-A-2 309 555 bekannt.

### Vorteile der Erfindung

Die Erfindung mit den in Anspruch 1 angegebenen Merkmalen schafft einen Anfahrassistenten mit erhöhter Verkehrssicherheit.

Bei dem erfindungsgemäßen Anfahrassistenten ist zusätzlich zu dem langreichweitigen Ortungssystem ein Nahbereichsortungssystem vorgesehen, mit dem Objekte, beispielsweise Fußgänger, Radfahrer oder dergleichen geortet werden können, die sich unmittelbar vor dem eigenen Fahrzeug befinden, auch wenn diese Objekte sich im toten Winkel des langreichweitigen Ortungssystems befinden. Eine Entscheidungseinrichtung wertet die Meßdaten des Nahbereichsortungssystems aus und sorgt dafür, daß der Anfahrvorgang abgebrochen oder gar nicht erst eingeleitet wird, wenn Objekte vom Nahbereichsortungssystem vor dem eigenen Fahrzeug geortet werden. Auf diese Weise wird die Gefahr erheblich herabgesetzt, daß Situationen, in denen sich Objekte unmittelbar vor dem Fahrzeug im toten Winkel des langreichweitigen Ortungssystems befinden, zu Unfällen führen.

Wenn das Nahbereichsortungssystem nur eine sehr geringe Ortungstiefe aufweist, wie es insbesondere bei Ultraschallsensoren der Fall ist, kann es vorkommen, daß auch bei einer Kombination des langreichweitigen Ortungssystems mit dem Nahbereichortungssystem der tote Winkel nicht vollständig eliminiert wird. In ungünstigen Fällen können dann Objekte, von denen eine Kollisionsgefahr ausgeht, im toten Winkel des Radärsensors liegen und zugleich so weit von dem Fahrzeug entfernt sein, daß sie von dem Nahbereichsortungssystem noch nicht geortet werden können. Für diese Fälle ist gemäß der Erfindung ein Initial-Anfahrregler vorgesehen, der speziell die Anfangsphase des Anfahrvorgangs steuert, so lange, bis das Fahrzeug eine bestimmte Anfahrstrecke zurückgelegt hat. In dem Initial-Anfahrregler wird ein Algorithmus verwendet, der nur eine begrenzte Maximalgeschwindigkeit zuläßt, sei es durch unmittelbare Begrenzung der Geschwindigkeit oder durch Begrenzung der Anfahrbeschleunigung. Die Maximalgeschwindigkeit ist dabei so gewählt, daß der aus dieser Geschwindigkeit resultierende Anhalteweg kleiner ist als die Reichweite des Nachbereichsortungssystems. Falls sich ein Objekt in dem verbleibenden toten Winkel befindet, wird dieses Objekt früher oder später in den Ortungsbereich des Nahbereichsortungssystems gelangen, und es ist somit sichergestellt, daß das Fahrzeug noch rechtzeitig wieder zum Stillstand gebracht werden kann, bevor es zu einer Kollision mit dem Objekt kommt. Bevorzugt ist die Maximalgeschwindigkeit so gewählt, daß der Anhalteweg um eine bestimmte Sicherheitsdistanz kleiner ist als die Ortungstiefe des Nahbereichsortungssystems.

Vorteilhafte Ausgestaltungen und weiterbildungen der Erfindung ergeben sich aus den Unteransprüchen.

Bevorzugt weist das Nahbereichsortungssystem einen oder mehrere Ultraschallsensoren auf. Besonders bevorzugt handelt es sich dabei um Ultraschallsensoren, die als Bestandteil des Einparkhilfesystems ohnehin am Fahrzeug vorhanden sind. Auf diese Weise wird eine beträchtliche Steigerung der Verkehrssicherheit ohne aufwendige zusätzliche Sensorik ermöglicht.

Der Initial-Anfahrregler ist vorzugsweise so konzipiert, daß er auch in das Bremssystem des Fahrzeugs eingreifen und automatisch einen Bremsvorgang auslösen kann, wenn während der Anfangsphase des Anfahrvorgangs ein Objekt in den Ortungsbereich des Nahbereichsortungssystem gelangt.

Wenn das Fahrzeug die erwähnte Anfahrstrecke zurückgelegt hat, wird auf den regulären Anfahrregler umgeschaltet, der größere Beschleunigungen und Geschwindigkeiten erlaubt, so daß der Anfahrvorgang zügig fortgesetzt werden kann und das eigene Fahrzeug Anschluß zu dem vorausfahrenden Fahrzeug hält.

Typische Situationen, die mit dem erfindungsgemäßen Anfahrassistenten beherrscht werden können, bestehen beispielsweise darin, daß, im Stadtverkehr, Personen versuchen, noch die Fahrbahn zu überqueren, während eine Autoschlange vor einer roten Ampel hält, oder daß, etwa bei einem Stau auf einer Autobahn, Personen ausgestiegen sind und sich noch im Fahrkorridor des eigenen Fahrzeugs aufhalten, wenn der Stau sich auflöst. Solche Situationen treten am häufigsten in der ersten Phase des Anfahrvorgangs auf, und ihre Häufigkeit nimmt deutlich ab, wenn sich die Fahrzeugschlange erst in Bewegung gesetzt hat. Durch geeignete Wahl der Anfahrstrecke, während der der Initial-Anfahrregler aktiv ist, läßt sich somit die Unfallgefahr deutlich reduzieren.

In einer besonders bevorzugten Ausführungsform ist die Anfahrstrecke so groß gewählt, daß Objekte, die um mehr als diese Anfahrstrecke von der Vordergrenze des Ortungsbereiches des Nahbereichsortungssystems entfernt sind, von der mit zunehmendem Abstand breiter werdenden Radarkeule des langreichweitigen Ortungssystems geortet werden können. Auf diese Weise wird trotz der begrenzten Reichweite des Nahbereichsortungssystems der tote Winkel faktisch vollständig beseitigt.

Dem Nahbereichsortungssystem ist bevorzugt ein Plausibilitätsmodul zugeordnet, das die Plausibilität des Ortungsergebnisses bewertet. Die Plausibilität kann z.B. von der Stärke des Ortungssignals, von der Dauer, während der dieses Signal vorliegt und, bei Signalen von mehreren Ultraschallsensoren, auch von der Konsistenz dieser Signale sowie von der durch Triangulation bestimmbaren Querposition des georteten Objekts abhängig sein. Die automatische Einleitung des Bremsvorgangs in der Anfangsphase des Anfahrvorgangs sollte vorzugsweise nur oberhalb eines bestimmten Plausibilitätsniveaus erfolgen, damit Komfortbeeinträchtigungen und Irritationen des Nachfolgeverkehrs durch Fehlauslösungen vermieden werden. Bei geringer Plausibilität des Signals sollte lediglich der Beschleunigungsvorgang vorübergehend unterbrochen und/oder ein Warnhinweis an den Fahrer ausgegeben werden, etwa in der Form eines akustischen Signals.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm eines erfindungsgemäßen Anfahrassistenten;
- Figur 2: eine Skizze zur Erläuterung der Funktionsweise des Anfahrassistenten;
- Figur 3: eine Graphik, die den den Zusammenhang zwischen der Reichweite des Nahbereichsortungssystems und zulässige Maximalgeschwindigkeit in der Anfangsphase des Anfahrvorgangs illustriert; und
- Figur 4: ein Flußdiagramm zur Erläuterung der Arbeitsweise einer Entscheidungseinrichtung in dem Anfahrassistenten.

### Beschreibung des Ausführungsbeispiels

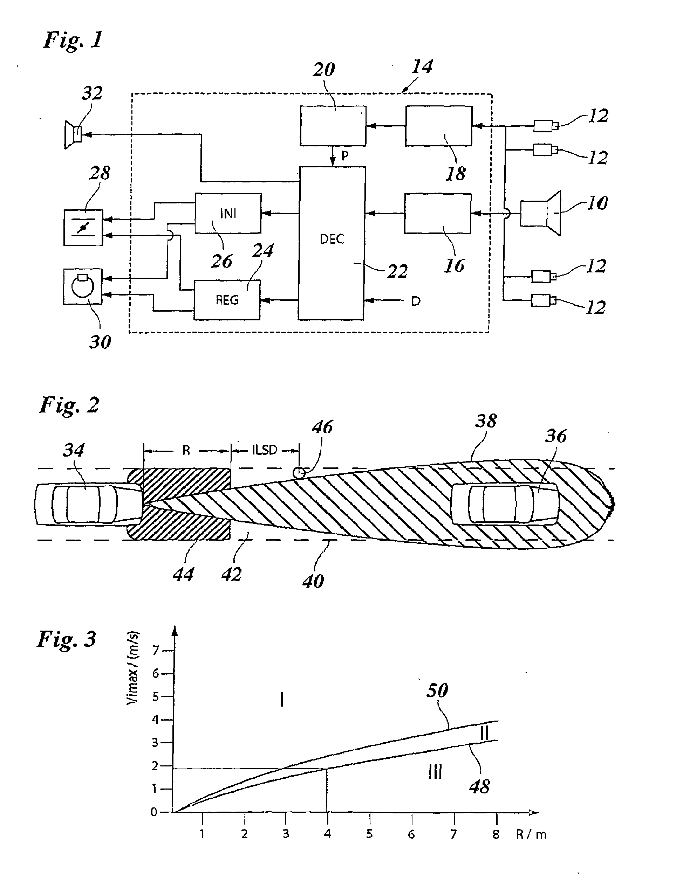

Der in Figur 1 gezeigte Anfahrassistent umfaßt einen Radarsensor 10, mehrere Ultraschallsensoren 12 und ein Datenverarbeitungssystem 14. Der Radarsensor 10 ist vorn im Fahrzeug eingebaut und dient als langreichweitiges Ortungssystem zur Ortung von vorausfahrenden Fahrzeugen und sonstigen Objekten in größerer Entfernung vom Fahrzeug.

Die Ultraschallsensoren 12 bilden zusammen ein Nahbereichsortungssystem und sind beispielsweise in die vordere Stoßstange des Fahrzeugs eingebaut, um Objekte unmittelbar vor dem Fahrzeug zu orten. Vorzugsweise sind die Ultraschallsensoren 12 zugleich Teil eines nicht gezeigten Einparkhilfesystems.

Das Datenverarbeitungssystem 14 wird beispielsweise durch einen oder mehrere Mikrorechner und zugehörige Software sowie Peripheriesysteme gebildet und kann neben den hier erläuterten Funktionen auch andere Funktionen im Rahmen eines ACC-Systems ausführen. Gezeigt und beschrieben werden hier nur die Systemkomponenten des Datenverarbeitungssystems 14, die für die Erläuterung der Erfindung von Bedeutung sind. Diese Komponenten können als spezialisierte Hardware oder auch als Softwaremodule implementiert sein. Im einzelnen umfaßt das Datenverarbeitungssystem 14 eine Datenaufbereitungseinheit 16 für den Radarsensor 10, eine Datenaufbereitungseinheit 18 für die Ultraschallsensoren 12, ein Plausibilitätsmodul 20, eine Entscheidungseinrichtung 22 und zwei Anfahrregler 24, 26.

Die Datenaufbereitungseinheit 16 wertet die Daten des Radarsensors 10 aus und berechnet daraus die Abstände, Relativgeschwindigkeiten und Azimutwinkel der georteten Objekte, insbesondere der vorausfahrenden Fahrzeuge. Die Datenaufbereitungseinheit 18 wertet die Daten der Ultraschallsensoren 12 aus und berechnet daraus die Abstände und - etwa durch Triangulation - die Querpositionen der von den Ultraschallsensoren georteten Objekte. Das Plausibilitätsmodul 20 unterzieht die von der Datenaufbereitungseinheit 18 gelieferten Daten einer Plausibilitäts- und Relevanzbewertung, um reale und relevante Objekte, von denen eine Kollisionsgefahr ausgehen könnte, von Scheinobjekten und irrelevanten Objekten zu unterscheiden. Kriterien für die Plausibilitätsbewertung sind beispielsweise die Amplituden der von den Ultraschallsensoren 12 empfangenen Signale, die Dauer, während der die Signale für ein bestimmtes Objekt anhalten, die Konsistenz zwischen den von den verschiedenen Ultraschallsensoren (auf derselben Fahrzeugseite) empfangenen Signalen und die Querpositionen der Objekte. Auf diese Weise können etwa sehr kleine Objekte wie auf der Straße liegende Konservendosen und dergleichen oder nur vorübergehend auftretende Objekte wie ein vorbeifliegender Vogel als Scheinobjekte eliminiert werden, und Objekte, die sich weit genug seitlich neben dem Fahrzeug befinden, können als irrelevante Objekte eliminiert werden. Die Plausibilität und Relevanz eines georteten Objektes wird durch einen Plausibilitätsparameter P angegeben, der an die Entscheidungseinrichtung 22 gemeldet wird.

Die Entscheidungseinrichtung 22 erhält als Eingangssignale neben dem Plausibilitätsparameter P die von der Datenaufbereitungseinheit 16 berechneten Ortungsdaten der vom Radarsensor 10 georteten Objekte sowie ein Wegsignal D, das den seit Beginn eines Anfahrvorgangs vom Fahrzeug zurückgelegten Weg angibt. Auf der Grundlage dieser Daten entscheidet die Entscheidungseinrichtung 22 über die Aktivierung und Deaktivierung der beiden Anfahrregler 24, 26, und die Ortungsdaten der vom Radarsensor 10 georteten Objekte werden jeweils an den aktiven Anfahrregler weitergeleitet.

Der Anfahrregler 24 ist ein "regulärer" Anfahrregler, wie er auch in bekannten Anfahrassistenten eingesetzt wird, und steuert bzw. regelt den Anfahrvorgang in Abhängigkeit von den Ortungsdaten des Radarsensors 10. Zu diesem Zweck greift der Anfahrregler 24 in das Antriebssystem 28 des Fahrzeugs ein.

Erforderlichenfalls greift der Anfahrregler 24 auch in das Bremssystem 30 des Fahrzeugs ein, beispielsweise dann, wenn das vorausfahrende Fahrzeug wieder anhält. Bei Fahrzeugen mit Automatikgetriebe muß die Fahrzeugbremse auch im Stand, also vor dem Anfahrvorgang, aktiviert werden, damit das Fahrzeug nicht anrollt.

Der zweite Anfahrregler 26 ist speziell für die Anfangsphase eines Anfahrvorgangs vorgesehen und soll deshalb als Initial-Anfahrregler bezeichnet werden. Dieser Regler steuert den Anfahrvorgang in ähnlicher Weise wie der reguläre Anfahrregler 24, erlaubt jedoch nur geringere Anfahrbeschleunigungen und - geschwindigkeiten, wie später noch näher erläutert werden soll. Außerdem ist der Initial-Anfahrregler 26 dazu ausgebildet, das Fahrzeug mit verhältnismäßig großer Verzögerungsrate in den Stand zu bremsen, also eine Art Notbremsung durchzuführen, falls während der Anfangsphase des Anfahrvorgangs von den Ultraschallsensoren 12 ein Objekt im Nahbereich geortet wird.

Ein - beispielsweise akustischer - Warnsignalgeber 32 ist dazu vorgesehen, auf Befehl der Entscheidungseinrichtung 22 ein Warnsignal für den Fahrer zu erzeugen, wenn ein Objekt im Nahbereich geortet wird.

Figur 2 zeigt ein Fahrzeug 34, das mit dem oben beschriebenen Anfahrassistenten ausgerüstet ist, sowie ein unmittelbar vor diesem Fahrzeug in derselben Fahrspur fahrendes oder haltendes weiteres Fahrzeug 36, das vom Radarsensor 10 geortet wird. Der Ortungsbereich 38 des Radarsensors 10 ist schraffiert eingezeichnet. Die Reichweite dieses Radarsensors, der auch für die normale ACC-Funktion bei Fahrten mit höherer Geschwindigkeit genutzt wird, kann in der Praxis 100m oder mehr betragen. Der Ortungsbereich 38 hat die Form einer "Keule", die bei Abständen, die normalen Fahrzeugabständen entsprechen, die gesamte Breite eines Fahrkorridors 40 des Fahrzeugs 34 abdeckt. Die Grenzen des Fahrkorridors 40 sind in Figur 2 durch gestrichelte Linien angedeutet. Der Fahrkorridor ist aus Sicherheitsgründen etwas breiter angenommen als die Breite des Fahrzeugs 34. Der Ortungsbereich 38 wird zum Fahrzeug 34 hin mit abnehmendem Abstand schmaler und deckt dann nicht mehr die gesamte Breite des Fahrkorridors ab, so daß tote Winkel 42 rechts und links neben der Radarkeule entstehen.

In Figur 2 ist außerdem der Ortungsbereich 44 der Ultraschallsensoren 12 eingezeichnet- Dieser Ortungsbereich deckt die gesamte Breite des Fahrkorridors 40 ab, hat jedoch nur eine verhältnismäßig geringe Tiefe von beispielsweise 4 m. Der tote Winkel 42 wird durch die Ultraschallsensoren 12 verkleinert aber nicht vollständig eliminiert, wie in Figur 2 zu erkennen ist.

Zur Erläuterung der Arbeitsweise des Anfahrassistenten soll nun anhand von Figur 2 ein Anfahrvorgang geschildert werden. Dazu sei angenommen, daß zunächst beide Fahrzeuge 34 und 36 stehen und dann das Fahrzeug 36 anfährt. Dies wird vom Radarsensor 10 registriert und an die Entscheidungseinrichtung 22 gemeldet. Die Entscheidungseinrichtung überprüft daraufhin, ob die Ultraschallsensoren 12 ein Objekt im Nahbereich, also im Ortungsbereich 44 geortet haben. Wenn dies der Fall ist, läßt die Entscheidungseinrichtung 22 beide Anfahrregler 24 und 26 inaktiv, so daß das Fahrzeug 34 stehen bleibt. Wahlweise kann der Fahrer durch ein optisches oder akustisches Signal auf diese Situation hingewiesen werden.

Wenn sich kein Objekt im Nahbereich befindet, aktiviert die Entscheidungseinrichtung 22 den Initial-Anfahrregler 26, und das Fahrzeug 34 fährt an. In dieser Situation ist es jedoch möglich, daß sich ein Objekt 46, beispielsweise ein Fußgänger, im toten Winkel 42 und außerhalb des Ortungsbereiches 44 befindet. Das Objekt 46 wird deshalb erst dann von den Ultraschallsensoren geortet werden, wenn das Fahrzeug 34 nach dem Anfahren eine bestimmte Distanz zurückgelegt hat, die in Figur 2 mit ILSD bezeichnet ist.

Der Initiale-Anfahrregler 26 ist deshalb so ausgelegt, daß das Fahrzeug 34 beim Anfahren nicht eine bestimmte Maximalgeschwindigkeit Vimax überschreitet, und diese Maximalgeschwindigkeit ist so gewählt, daß das Fahrzeug 34 noch wieder rechtzeitig zum Stehen gebracht werden kann, wenn die Ultraschallsensoren das Objekt 46 erstmals orten und daraufhin der Initial-Anfahrregler 26 die oben erwähnte "Notbremsung" einleitet. Auf diese Weise wird trotz des verbleibenden toten Winkels eine Kollision mit dem Objekt 46 sicher vermieden.

In der in Figur 2 gezeigten Situation hat das Objekt 46 unter der Bedingung, daß es innerhalb des Fahrkorridors 40 liegt und zugleich außerhalb des Ortungsbereiches 38 des Radarsensors liegt, den größtmöglichen Abstand zum Fahrzeug 34. Das heißt, wenn das Objekt 46 noch etwas weiter vom Fahrzeug 34 entfernt wäre, so würde es schon vom Radarsensor 10 geortet, und es würde anstelle des Fahrzeugs 36 das Zielobjekt für die Anfahrregelung bilden, so daß das Fahrzeug 34 schon aufgrund der normalen Funktion des Anfahrreglers gar nicht erst anfahren würde.

Es soll nun angenommen werden, daß das Objekt 46 nicht vorhanden ist. Wenn dann das Fahrzeug 34 die Distanz ILSD zurückgelegt hat und dabei kein Objekt von den Ultraschallsensoren 12 geortet wurde, so bedeutet dies, daß sich kein Objekt im toten Winkel befunden hat und somit der Fahrkorridor frei ist. Aus diesem Grund überprüft die Entscheidungseinrichtung 22 anhand des Wegsignals D, wann das Fahrzeug die Distanz ILSD (Initiale Langsamfahrt-Sicherheitsdistanz) zurückgelegt hat, und sobald dies der Fall ist, wird von dem Initialen-Anfahrregler 26 auf den regulären Anfahrregler 24 umgeschaltet, der höhere Beschleunigungen zuläßt, so daß der Anfahrvorgang zügig fortgesetzt wird.

Die Summe aus der Ortungstiefe R der Ultraschallsensoren 12 und der Distanz ILSD ist durch die Geometrie der Radarkeule des Radarsensors 10 und die Breite des Fahrkorridors 40 gegeben und beträgt in dem in Figur 2 gezeigten Beispiel 7 m. Die Maximalgeschwindigkeit Vimax für den Initial-Anfahrregler 26 ist dann von der Ortungstiefe R der Ultraschallsensoren sowie von folgenden weiteren Parametern abhängig: der maximalen Bremsverzögerung, die während des durch den Initial-Anfahrregler gesteuerten Bremsvorgangs erreicht werden darf, der Anfahrbeschleunigung während der initialen Phase des Anfahrvorgangs (genauer: der Beschleunigung in dem Augenblick, in dem das Objekt 46 erstmals geortet wird), dem "Bremsruck", d.h., der maximal zugelassenen Änderung der Beschleunigung bzw. Bremsverzögerung, einer umvermeidlichen Verzögerungszeit zwischen dem Zeitpunkt, zu dem das Objekt 46 geortet wird, und dem Zeitpunkt, zu dem der Bremsvorgang tatsächlich wirksam wird, und einer gewünschten Sicherheitsdistanz, die das Fahrzeug 34 noch zu dem Objekt 46 aufweisen soll, nachdem es zum Stillstand gebracht wurde.

Figur 3 zeigt ein Beispiel für den so erhaltenen Zusammenhang zwischen der Maximalgeschwindigkeit Vimax und der Ortungstiefe R der Ultraschallsensoren. Dabei wurden für die oben genannten Parameter die folgenden Werte zugrunde gelegt:

| | |
|---|---|
| Bremsverzögerung: | -2,0 m/s² |
| Anfahrbeschleunigung: | 1,5 m/s² |
| Bremsruck: | -7,0 m/s³ |
| Verzögerungszeit: | 0,3 s |
| Sicherheitsdistanz: | 0,2 m |

Die Kurve 48 in Figur 3 beschreibt den Zusammenhang für die genannte Sicherheitsdistanz von 0,2 m. Die Kurve 50 beschreibt den Zusammenhang für die Sicherheitsdistanz O. In dem Bereich III in Figur 3 kommt deshalb das Fahrzeug in einer Entfernung von mehr als 0,2 m vor dem Objekt 46 zum Stehen. Im Bereich II kann zwar eine Kollision noch verhindert werden, doch kommt das Fahrzeug in einem Abstand von weniger als 0,2 m vor dem Objekt zum Stehen. In dem Bereich I in Figur 3 kommt es zu einer Kollision.

Wenn die Ortungstiefe R der Radarsensoren 12 4 m beträgt, läßt sich aus Figur 3 eine Maximalgeschwindigkeit Vimax von etwa 1,8 m/s ablesen. Zweckmäßigerweise wird man die Anfahrbeschleunigung während der initialen Phase des Anfahrvorgangs so wählen, daß diese Maximalgeschwindigkeit gerade dann erreicht wird, wenn das Fahrzeug die Distanz ILSD zurückgelegt hat.

In der Praxis wird man die Maximalgeschwindigkeit und die initiale Anfahrbeschleunigung nicht beliebig klein wählen können. Wenn man für diese Größen bestimmte realistische Vorgaben macht, läßt sich umgekehrt aus Figur 3 ablesen, welche Ortungstiefe R die Ultraschallsensoren 12 oder ein anderes geeignetes Nahbereichsortungssystem haben sollte.

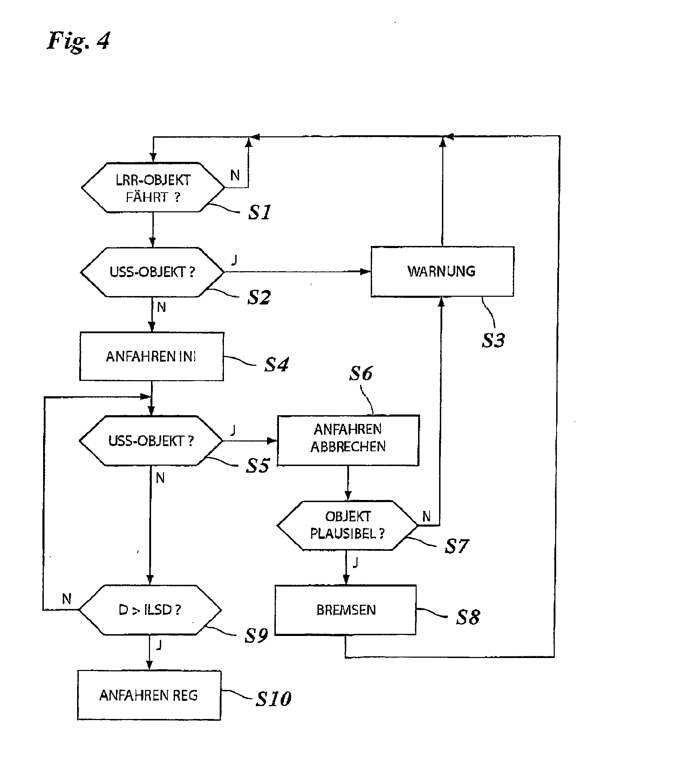

In Figur 4 sind die oben beschriebenen Vorgänge noch einmal als Flußdiagramm dargestellt.

In Schritt S1 wird geprüft, ob das vom Radarsensor (LRR) erfaßte Zielobjekt anfährt. Dieser Schritt wird zyklisch wiederholt, bis das Objekt anfährt. Dann wird in Schritt S2 geprüft, ob die Ultraschallsensoren (USS) ein Objekt detektiert haben. Dabei wird die Plausibilität des Objekts noch nicht berücksichtigt, oder es wird eine sehr niedrige Plausibilitätsschwelle benutzt. Wenn ein Objekt detektiert wurde, wird in Schritt S3 eine Warnung an den Fahrer ausgegeben, und es erfolgt ein Rücksprung zu Schritt S1, d.h., das Fahrzeug fährt nicht an. Wenn in Schritt S2 kein Objekt detektiert würde, wird der Anfahrvorgang in Schritt S4 durch den Initial-Anfahrregler 26 gesteuert. Wenn während dieser initialen Anfahrphase dann doch ein Objekt von den Ultraschallsensoren detektiert wird (Schritt S5), so wird in Schritt S6 der Anfahrvorgang unverzüglich abgebrochen, d.h., es erfolgt keine weitere Beschleunigung, doch wird auch noch kein Bremsvorgang eingeleitet. In Schritt S7 wird dann die Plausibilität des georteten Objekts geprüft. Bei niedriger Plausibilität erfolgt eine Verzweigung zu Schritt S3, und es wird der Warnhinweis an den Fahrer ausgegeben. Der Anfahrvorgang bleibt ausgesetzt, bis das Objekt verschwunden ist oder der Fahrer eingreift. Bei hoher Plausibilität in Schritt S7 wird in Schritt S8 der Notbremsvorgang durch den Initial-Anfahrregler 26 eingeleitet. Danach erfolgt ein Rücksprung zu Schritt S1, so daß das Fahrzeug erneut anfahren kann, wenn der Fahrkorridor frei ist.

Wenn während der initialen Anfahrphase kein Objekt im Nahbereich detektiert wurde (Schritt S5), so wird in Schritt S9 geprüft, ob der vom Fahrzeug 34 seit Beginn des Anfahrvorgangs zurückgelegte Weg D größer ist als die Distanz ILSD. Ist dies nicht der Fall, erfolgt ein Rücksprung zu Schritt S5. Andernfalls wird in Schritt S10 die Steuerung des Anfahrvorgangs durch den regulären Anfahrregler 24 übernommen.

## Patentansprüche

1. Anfahrassistent für Kraftfahrzeuge, mit einem langreichweitigen Ortungssystem (10) zur Ortung vorausfahrender Fahrzeuge (36) und einem Anfahrregler (24, 26) zur Einleitung und Steuerung eines Anfahrvorgangs, wobei das Ortungssystem mit einem Nahbereichsortungssystem (12) zur Ortung von Objekten (46) unmittelbar vor dem eigenen Fahrzeug (34) kombiniert ist und eine Entscheidungseinrichtung (22) dazu ausgebildet ist, auf ein Signal des Nahbereichsortungssystems den Anfahrvorgang zu unterbinden oder abzubrechen, **dadurch gekennzeichnet, daß** für eine Anfangsphase des Anfahrvorgangs ein Initial-Anfahrregler (26) vorgesehen ist, der eine Maximalgeschwindigkeit (Vimax) für diese Phase des Anfahrvorgangs so festlegt, daß der Anhalteweg des Fahrzeugs (34) kleiner ist als die Ortungstiefe (R) des Nahbereichsortungssystems.

2. Anfahrassistent nach Anspruch 1, **dadurch gekennzeichnet, daß** das Nahbereichsortungssystem durch einen oder mehrere Ultraschallsensoren (12) gebildet wird.

3. Anfahrassistent nach Anspruch 2, **dadurch gekennzeichnet, daß** die Ultraschallsensoren (12) Teil eines Einparkhilfesystems sind.

4. Anfahrassistent nach einem der vorstehenden Ansprüche, **dadurch gekennzeichnet, daß** der Initial-Anfahrregler (26) dazu ausgebildet ist, das Fahrzeug (34) in den Stand zu bremsen, wenn vom Nahbereichsortungssystem (12) ein Objekt (46) detektiert wird.

5. Anfahrassistent nach Anspruch 4, **dadurch gekennzeichnet, daß** die Entscheidungseinrichtung (22) dazu ausgebildet ist, die Steuerung des Anfahrvorgangs von dem initialen Anfahrregler (26) an einen regulären, höhere Geschwindigkeiten zulassenden Anfahrregler (24) zu übergeben, wenn der vom Fahrzeug (34) seit Beginn des Anfahrvorgangs zurückgelegte Weg (D) größer ist als eine bestimmte Distanz ILSD.

6. Anfahrassistent nach Anspruch 5, **dadurch gekennzeichnet, daß** die Summe aus der Reichweite (R) des Nahbereichsortungssystems und der Distanz ILSD dem maximalen Abstand entspricht, den ein Objekt (46) vom Fahrzeug (34) haben kann, wenn das Objekt innerhalb des Fahrkorridors (40) des Fahrzeugs und außerhalb des Ortungsbereiches (38) des langreichweitigen Ortungssystems (10) liegt.

7. Anfahrassistent nach Anspruch 5 oder 6, **dadurch gekennzeichnet, daß** ein Plausibilitätsmodul (20) zur Plausibilitätsbewertung der Ortungsdaten des Nahbereichsortungssystems (12) vorgesehen ist und daß die Entscheidungseinrichtung (22) dazu ausgebildet ist, den Initial-Anfahrregler (26) nur dann zu einem Bremsvorgang zu veranlassen, wenn die Plausibilität (P) der Ortungsdaten oberhalb eines bestimmten Schwellenwertes liegt.

8. Anfahrassistent nach Anspruch 7, **dadurch gekennzeichnet, daß** die Entscheidungseinrichtung (22) dazu ausgebildet ist, den Beschleunigungsvorgang während der Anfahrphase abzubrechen, wenn das Nahbereichsortungssystem (12) ein Objekt geortet hat und die Plausibilität (P) der Ortungsdaten kleiner ist als der Schwellenwert.

9. Anfahrassistent nach einem der vorstehenden Ansprüche, **gekennzeichnet durch** einen Warnsignalgeber (32) zur Ausgabe eines Warnsignals an den Fahrer, wenn das Nahbereichsortungssystem (12) ein Objekt geortet hat.

## Claims

1. Start-up assist system for motor vehicles, having a long-range locating system (10) for locating vehicles (36) travelling ahead and a start-up controller (24, 26) for initiating and controlling a start-up process, wherein the locating system is combined with a short-range locating system (12) for locating objects (46) directly in front of the driver's own vehicle (34), and a decision device (22) is designed to interrupt or abort the start-up process in response to a signal from the short-range locating system, **characterized in that** an initial start-up controller (26) is provided for a start-up phase of the start-up process, which initial start-up controller (26) defines a maximum speed (Vimax) for this phase of the start-up process in such a way that the stopping distance of the vehicle (34) is shorter than the locating depth (R) of the short-range locating system.

2. Start-up assist system according to Claim 1, **characterized in that** the short-range locating system is formed by one or more ultrasonic sensors (12).

3. Start-up assist system according to Claim 2, **characterized in that** the ultrasonic sensors (12) are part of a parking aid system.

4. Start-up assist system according to one of the preceding claims, **characterized in that** the initial start-up controller (26) is designed to brake the vehicle (34) to a stationary state if an object (46) is detected by the short-range locating system (12).

5. Start-up assist system according to Claim 4, **characterized in that** the decision device (22) is designed to transfer the control of the start-up process from the initial start-up controller (26) to a normal start-up controller (24) which permits relatively high speeds, if the distance (D) travelled by the vehicle (34) since the beginning of the start-up process is greater than a predetermined distance ILSD.

6. Start-up assist system according to Claim 5, **characterized in that** the sum of the range (R) of the short-range locating system and the distance ILSD corresponds to the maximum distance which an object (46) can be from the vehicle (34) if the object is located within the driving corridor (40) of the vehicle and outside the locating range (38) of the long-range locating system (10).

7. Start-up assist system according to Claim 5 or 6, **characterized in that** a plausibility-checking module (20) is provided for evaluating the plausibility of the locating data of the short-range locating system (12), and **in that** the decision device (22) is designed to cause the initial start-up controller (26) to carry out a braking process only if the plausibility (P) of the locating data is above a specific threshold value.

8. Start-up assist system according to Claim 7, **characterized in that** the decision device (22) is designed to abort the acceleration process during the start-up phase if the short-range locating system (12) has located an object and the plausibility (P) of the locating data is lower than the threshold value.

9. Start-up assist system according to one of the preceding claims, **characterized by** a warning signal generator (32) for outputting a warning signal to the driver if the short-range locating system (12) has located an object.

## Revendications

1. Système d'assistance au démarrage de véhicules automobiles, qui présente
un système de localisation (10) à longue portée qui permet de localiser des véhicules (36) se déplaçant en avant et
un régulateur de démarrage (24, 26) qui lance et commande une opération de démarrage,
le système de localisation étant combiné à un système (12) de localisation dans l'environnement proche permettant de localiser des objets (46) situés immédiatement en avant du véhicule propre (34) et
un dispositif de décision (22) étant configuré pour retenir ou interrompre l'opération de démarrage sur un signal du système de localisation dans l'environnement proche,
**caractérisée en ce que**
un régulateur (26) de début de démarrage est prévu pour une phase initiale de l'opération de démarrage et définit une vitesse maximale (Vimax) de cette phase de l'opération de démarrage de telle sorte que la distance d'arrêt du véhicule (34) soit inférieure à la portée de localisation (R) du système de localisation dans l'environnement proche.

2. Système d'assistance au démarrage selon la revendication 1, **caractérisé en ce que** le système de localisation dans l'environnement proche est formé par un ou plusieurs détecteurs (12) à ultrasons.

3. Système d'assistance au démarrage selon la revendication 2, **caractérisé en ce que** les détecteurs (12) à ultrasons font partie d'un système d'assistance au stationnement.

4. Système d'assistance au démarrage selon l'une des revendications précédentes, **caractérisé en ce que** le régulateur (26) de début de démarrage est configuré pour freiner le véhicule (34) jusqu'à l'arrêt si un objet (46) a été détecté par le système (12) de localisation dans l'environnement proche.

5. Système d'assistance au démarrage selon la revendication 4, **caractérisé en ce que** le dispositif de décision (22) est configuré pour transmettre la commande de l'opération de démarrage du régulateur (26) de début de démarrage à un régulateur de démarrage (24) régulier qui permet des vitesses plus élevées si la distance (D) parcourue par le véhicule (34) depuis le début de l'opération de démarrage est supérieure à une distance ILSD définie.

6. Système d'assistance au démarrage selon la revendication 5, **caractérisé en ce que** la somme de la portée (R) du système de localisation dans l'environnement proche et de la distance ILSD correspond à la distance maximale qu'un objet (46) peut présenter par rapport au véhicule (34) si l'objet est situé à l'intérieur du corridor de déplacement (40) du véhicule et à l'extérieur de la zone de localisation (38) du système (10) de localisation à longue portée.

7. Système d'assistance au démarrage selon les revendications 5 ou 6, **caractérisé en ce qu'**un module de plausibilité (20) qui évalue la plausibilité des données de localisation du système (12) de localisation dans l'environnement proche est prévu et **en ce que** le dispositif de décision (22) est configuré pour ne permettre au régulateur (26) de début de démarrage de lancer une opération de freinage que si la plausibilité (P) des données de localisation est située au-dessus d'une valeur de seuil définie.

8. Système d'assistance au démarrage selon la revendication 7, **caractérisé en ce que** le dispositif de décision (22) est configuré pour interrompre l'opération d'accélération pendant la phase de démarrage si le système (12) de localisation dans l'environnement proche a localisé un objet et si la plausibilité (P) des données de localisation est inférieure à la valeur de seuil.

9. Système d'assistance au démarrage selon l'une des revendications précédentes, **caractérisé par** un émetteur (32) de signaux d'avertissement qui délivre un signal d'avertissement au conducteur si le système (12) de localisation dans l'environnement proche a localisé un objet.
